# EUROPEAN PATENT SPECIFICATION

(11) **EP 0 740 632 B1**
(45) Date of publication and mention of the grant of the patent: **21.04.1999**
(21) Application number: 95908405.4
(22) Date of filing: 26.01.1995
(51) Int. Cl.: B65D 43/10, B65D 17/40

(54) **A PACKAGE WITH A RECLOSABLE LID**
VERPACKUNG MIT WIEDERVERSCHLIESSBAREM DECKEL
EMBALLAGE AVEC COUVERCLE REFERMABLE

(30) Priority: 28.01.1994 SE 9400283
(43) Date of publication of application: 06.11.1996
(73) Proprietor: AB CERBO, S-461 29 Trollhättan (SE)
(72) Inventor: INGEMARSSON, Hakan, S-461 35 Trollhättan (SE)
(74) Representative: Stolt, Lars C.
(86) International application number: SE9500078
(87) International publication number: WO9520529

(56) References cited:
- EP-A- 174 688
- SE-B- 457 948
- US-A- 2 998 158
- US-A- 3 858 748
- US-A- 4 207 989
- US-A- 4 433 793

## Description

### Technical field

The present invention relates to a package comprising a container and a cover which is permanently and sealingly connected to the container by means of a closure that has to be broken for the cover to be detached from the container, the cover after detachment being detachably and sealingly connectable to the container.

The package is designed to contain food products, such as liver paste, which must be sealingly contained in the package from the time of packaging until opening and from the time of reclosure until reopening in order to keep for a long time.

### Prior art

Packages of the above-mentioned kind are previously known, for example from SE-B-470 095. However, they have certain disadvantages. One of the most obvious disadvantages of the package in SE-B-470 095 is that it is unstable and that the sealing between container and cover is unreliable both before and after the breakage, and that air will enter the interior of the package, should the permanent closure or indication of fracture thereof be damaged before the breakage is carried out. Another disadvantage is that the package is unstable when container and cover are permanently closed, which might result in damaging of the permanent closure on, for instance, stacking of a number of packages. A further disadvantage is that the space between the packaged product and the cover of the package is large before the package is first broken, so that the product will be exposed to the influence of air to an unnecessarily great degree.

The closest prior art is described in EP-A-0 174 688. However, the welding between the container and the cover takes place in a vertical plane, which means that the container has to be rotated around its vertical center during the welding. This procedure means that the handling in connection with the filling mechanism will be more difficult and that the sealing will be less effective.

### Summary of the invention

It is an object of the present invention to eliminate, at least partly, the disadvantages of previously known packages of the kind mentioned initially and to provide a package which is tight before the initial breakage as well as after reclosure of the connection between container and cover, which is tight even if the permanent connection is damaged, and is stable and does not enclose an unnecessarily large dead space between the packaged product and the cover.

This object is achieved in that the package according to the invention has been given the features stated in the characterizing portion of claim 1.

The other characteristics and advantages of the package according to the invention will appear from the subclaims and the subsequent description of an embodiment of the invention.

### Description of the drawings

Fig. 1 is an exploded side view, in section, showing a package according to the invention, wherein a cover has been removed from a container,
Fig. 2 is a top view of the package of Fig. 1, the left half of the figure showing the cover of Fig. 1 from above and the right half of the figure showing the container of Fig. 1 from above,
Fig. 3 is a partial view of the package of Figs. 1 and 2 wherein the container and the cover are permanently interconnected, and
Fig. 4 is a partial view similar to the one of Fig. 3, except that the permanent connection is broken and the cover is spaced from the container, like in Fig. 1.

### Preferred embodiment

The container of the package is indicated at 1 and the cover thereof at 2. The container 1 is substantially parallel epipedic with rounded corners while the cover 2 is substantially plane. The container and the cover are each made in one piece by injection moulding or die cast from the same plastic material, preferably polypropylene, which is flexible. In an alternative embodiment the container 1 and the cover 2 may be made in one piece with so called live hinges therebetween.

The container 1 is provided with an upper opening which is surrounded or delimited by a ring consisting in cross section of an inverted U, with two free legs 3 and 4 and a leg 5 interconnecting the same, and a flange 6 connected to the leg 4. The leg 3 forming the upper portion of the container is provided with an annular projection 7 extending round the entire circumference of the container. The flange 6 is provided with a V-shaped indication of fracture 8 which is arranged round the entire container on the upper surface of the flange. The indication of fracture 8 may instead be arranged on the lower surface of the flange 6 or may be arranged on the flange 12 on the upper or lower surface thereof.

The cover 2 is substantially plane and is provided with a ring extending round the entire circumference thereof, which ring in cross section consists of an inverted U, with two free legs 9 and 10 and a leg 11 interconnecting the same, and a flange 12 connected to the leg 10. In the area between the leg 9 and the plane portion of the cover there is an annular projection 13 extending round the cover, which projection is spaced from the lower surface of the leg 11 a distance which is somewhat larger than the distance between the projection 7 and the upper surface of the leg 5.

When the container 1 has been filled with food product, such as liver paste, the cover 2 is attached to the container 1 and a force is applied from above to the leg 11 and optionally to the plane portion of the cover so that the U 9-11 will be brought to surround the U 3-5. During depression of the cover, the legs 9 and 10 will spring outwardly away from each other and the legs 3 and 4 will spring inwardly towards each other until the projection 13 has passed the projection 7 when the legs will spring back to their original positions, but not fully to said positions in order to ensure that the projection 7 will always sealingly abut against the leg 9 and/or the projection 13 will always sealingly abut against the leg 3, and that the legs 4 and 10 will always sealingly abut against each other. When the cover has been attached to the container, the two flanges 6 and 12 will lie close to each other or abut against each other.

When the cover has been connected to the container in the above described way the flanges 6 and 12 are connected to each other at 14, for example by ultrasonic welding. This connection causes the container and cover to be permanently and sealingly interconnected.

During transport of the thusly filled and closed packages to wholesaler and retailer, a plurality of packages are stacked on top of each other with the container base of an upper package abutting against the plane portion of a cover of a package below. The load to which an underlying packing is exposed is absorbed by the plane portion of the cover and is transferred to the ring 3 -5, which is stable. Thus, the risk of the cover or container being damaged or the connection therebetween being broken during stacking and transport is slight.

When the consumer is to open the package he will firstly establish that the connection between container 1 and cover 2 is not broken and he will then grip the flanges 12, 14 and pull them upwardly-outwardly so that the flange 6 will be divided at the indication of fracture 8. On continued pulling upwardly of the cover relative to the container, the projection 13 will snap past the projection 7 until the cover is released, as shown in Fig. 4.

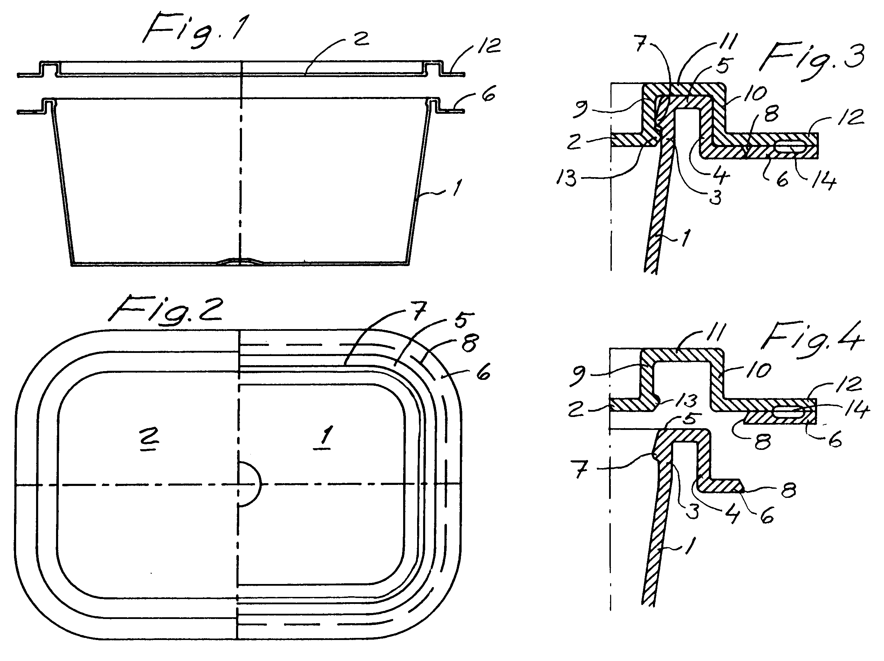

On reclosure of the package, the cover is replaced on the container in the above described way, the cover and the container occupying the positions shown in Fig. 3, with two separate, effective sealings, one between the projections 7 and 13 and the other one between the legs 4 and 10.

While only one embodiment of the present invention has been described above and shown in the drawings, it will be appreciated that the invention is not limited to this embodiment but only by what is stated in the claims.

## Claims

1. A package consisting of a container (1) and a cover (2) which is permanently and sealingly connected to the container by means of a closure (14) that has to be broken for the cover to be detached from the container, the cover after detachment being detachably and sealingly connectable to the container, and the cover and the container occupying the same relative positions when they are permanently and detachably connected, the detachable connection including a snap device (7, 13) with at least one projection (7) extending round the container (1) and one projection (13) extending round the cover (2), the container opening being delimited by an annular device, which in cross section at least partially is U-shaped with the opening directed towards a plane through the bottom of the container and which cooperates with a similar U-shaped device in the cover (2), the container (1) and the cover (2) being permanently interconnected along abutting flanges (6, 12) extending round the container and the cover, with an indication of fracture (8) being formed in one of said flanges, **characterized** in that the snap device (7, 13) extends round the interior of the container, that the flanges (6, 12) are parallel with the bottom, and in that two separate sealings are provided, one at the snap device (7, 13) and the other between two legs (4, 10) of the U-shaped devices.

2. A package according to claim 1, **characterized** in that the container (1) and the cover (2) consist of the same plastic material and are die cast or injection moulded.

3. A package according to claim 1 or 2, **characterized** in that the indication of fracture is formed as a recess (8) extending round the container (1).

## Patentansprüche

1. Verpackung bestehend aus einem Behälter (1) sowie einem Deckel (2), der mit dem Behälter dauerhaft und dichtend durch einen Verschluß (14) verbunden ist, welcher aufgebrochen werden muß, um den Deckel vom Behälter abzunehmen, wobei der Deckel nach seiner Abnahme wieder lösbar und dichtend mit dem Behälter verbindbar ist und der Deckel sowie der Behälter die gleichen relativen Positionen einnehmen, sobald sie dauerhaft lösbar miteinander verbunden sind, und wobei die lösbare Verbindung eine Schnappeinrichtung (7, 13) mit mindestens einem sich um den Behälter (1) herum erstreckenden Vorsprung (7) sowie einem sich um den Deckel (2) herum erstreckenden Vorsprung (13) umfaßt und die Behälteröffnung durch ein ringförmiges Organ begrenzt ist, dessen Querschnitt zumindest teilweise U-förmig mit zu der durch den Boden des Behälters verlaufenden Ebene hin gerichteter Öffnung ausgebildet ist und welches mit einem ähnlichen U-förmigen Organ am Deckel (2) zusammenarbeitet, wobei der Behälter (1) und der Deckel (2) entlang aneinander anliegender und um den Behälter sowie den Deckel herum verlaufender Flansche (6, 12) mit einer an einem der Flansche vorgesehenen Soll-Bruchstelle (8) dauerhaft in Verbindung stehen, dadurch gekennzeichnet, daß sich die Schnappeinrichtung (7, 13) um das Innere des Behälters herum erstreckt, wobei die Flansche (6, 12) parallel zum Behälterboden verlaufen, und daß zwei separate Dichtungen vorgesehen sind, u.zw. eine an der Schnappeinrichtung (7, 13) und die andere zwischen zwei Schenkein (4, 10) der U-förmigen Organe.

2. Verpackung nach Patentanspruch 1, dadurch gekennzeichnet, daß der Behälter (1) und der Deckel (2) aus dem gleichen Kunststoffmaterial bestehen und formgepreßt oder spritzgußgeformt sind.

3. Verpackung nach Patentanspruch 1 oder 2, dadurch gekennzeichnet, daß die Sollbruchstelle als Vertiefung (8) ausgebildet ist, die sich um den Behälter (1) herum erstreckt.

## Revendications

1. Emballage se composant d'un récipient (1) et d'un couvercle (2) qui est raccordé de manière permanente et étanche par l'intermédiaire d'une fermeture (14) qui doit être cassée afin de détacher le couvercle du récipient, le couvercle, après avoir été détaché, pouvant être raccordé de manière amovible et étanche au récipient, et le couvercle et le récipient occupant les mêmes positions relatives lorsqu'ils sont raccordés de manière permanente et amovible, la partie détachable comprenant un dispositif à encliquetage (7, 13) avec au moins une saillie (7) s'étendant autour du récipient (1) et une saillie (13) s'étendant autour du couvercle (2), l'ouverture du récipient étant délimitée par un dispositif annulaire, qui, en coupe transversale, au moins partiellement, est en forme de U, l'ouverture état dirigée vers un plan au fond du récipient et qui coopère avec un dispositif en forme de U similaire dans le couvercle (2), le récipient (1) et le couvercle (2) état raccordés entre eux de manière permanente le long de brides de butée (6, 12) s'étendant autour du récipient et du couvercle, une indication de rupture (8) étant formée dans une desdites brides, caractérisé en ce que le dispositif à encliquetage (7, 13) s'étend tout autour de l'intérieur du récipient, en ce que les brides (6, 12) sont parallèles au fond et en ce que deux joints séparés sont prévus, un au niveau du dispositif à encliquetage (7, 13) et l'autre entre deux pattes (4, 10) des dispositifs en forme de U.

2. Emballage selon la revendication 1, caractérisé en ce que le récipient (1) et le couvercle (2) se composent du même matériau plastique et sont moulés sous pression ou moulés par injection.

3. Emballage selon la revendication 1 ou 2, caractérisé en ce que l'indication de rupture est formée comme un creux (8) s'étendant autour du récipient (1).
